# EUROPÄISCHE PATENTSCHRIFT

(11) **EP 1 912 007 B1**
(45) Veröffentlichungstag und Bekanntmachung des Hinweises auf die Patenterteilung: **01.03.2017**
(21) Anmeldenummer: 07018885.9
(22) Anmeldetag: 26.09.2007
(51) Int. Cl.: F16L 33/08

(54) **Schlauchschelle**
Hose clip
Collier de serrage

(30) Priorität: 12.10.2006 DE 102006048344
(43) Veröffentlichungstag der Anmeldung: 16.04.2008
(73) Patentinhaber: NORMA Germany GmbH, 63477 Maintal (DE)
(72) Erfinder: Krauß, Mathias, 61130 Nidderau (DE)
(74) Vertreter: Patentanwälte Olbricht Buchhold Keulertz

(56) Entgegenhaltungen:
- WO-A1-2004/044474
- DE-U1-202005 011 542
- US-A- 3 454 996
- US-A- 3 477 106
- US-A1- 2004 207 195

## Beschreibung

Die Erfindung betrifft eine Schlauchschelle mit einem Schellenband, einer Spanneinrichtung und einer Positionieranordnung, die mindestens einen Positionierer mit einer Basis und zwei Krallen, die in eine Schlauchwand eindrückbar sind, aufweist.

Eine Schlauchschelle dient dazu, einen Schlauch auf einem Stutzen festzuklemmen. Hierzu wird die Schlauchschelle im Bereich des Stutzens um den Schlauch gelegt, und die Spanneinrichtung wird betätigt, um das Schellenband um den Umfang des Schlauchs zusammenzuziehen. Dadurch wird der Schlauch auf dem Stutzen klemmend festgehalten.

Um die Spanneinrichtung betätigen zu können, muß der Monteur ein Werkzeug ansetzen. Aus diesem Grund verlangen viele Verwender von Schlauchschellen, daß die Schlauchschelle an dem Schlauch vormontiert ist, also zumindest in Umfangsrichtung eine vorbestimmte Ausrichtung zum Schlauch aufweist.

Man hat daher in WO 2004/044474 A1, aus der eine Schlauchschelle der eingangs genannten Art bekannt ist, vorschlagen, einen Positionierer am Schellenband zu befestigen, der zwei Krallen aufweist, die an einer Basis befestigt sind. Jede Kralle weist zunächst einen Abschnitt auf, der im wesentlichen senkrecht zur Basis gerichtet ist und dabei nach außen, also weg vom Schlauch, ragt. An diesen Abschnitt schließt sich ein winklig gebogenes Ende an. Zum Befestigen der Schlauchschelle am Schlauch ist ein Werkzeug notwendig, das mit einem Stempel die Basis in Richtung auf den Schlauch drückt. Der Schlauch wird von innen durch eine Stütze gehalten. Wenn die Schlauchschelle so festgehalten worden ist, treten zwei Klemmbacken in Aktion, die die Krallenenden seitlich, also in Umfangsrichtung des Schlauchs, beaufschlagen und dadurch die Krallen aufeinander zu bewegen. Die Krallen graben sich dadurch in die Wand des Schlauches ein, wodurch die Schlauchschelle am Schlauch verankert wird.

Eine derartige Befestigung erfordert einen relativ hohen Aufwand.

Weitere Schlauchschellen mit einer Positionieranordnung sind beispielsweise bekannt aus den Dokumenten US 2004/207195 A1, US 3 454 996 A, US 3 477 106 A und DE 20 2005 011542 U1.

Der Erfindung liegt die Aufgabe zugrunde, die Vormontage der Schlauchschelle am Schlauch zu vereinfachen.

Diese Aufgabe wird durch eine Schlauchschelle mit den Merkmalen nach Anspruch 1 gelöst.

Mit einer derartigen Form der Kralle wird die Vormontage der Schlauchschelle am Schlauch ganz erheblich vereinfacht. Es ist im Grunde nur noch erforderlich, einen Druck auf die Basis auszuüben, der, bezogen auf den Schlauch, radial gerichtet ist. Hierbei dringt das Ende der Kralle, das unter einem stumpfen Winkel zum Abschnitt steht, der mit der Basis verbunden ist, in den Mantel des Schlauchs ein. Dieses Eindringen erfolgt aufgrund der winkligen Anordnung des Endes zwar zunächst ebenfalls radial oder parallel zur Radialrichtung. Bereits nach einer sehr kurzen Eindringstrecke wird das Ende aber seitlich abgelenkt. Da das Ende des Abschnitts, das mit der Basis verbunden ist, dieser Ablenkung nicht folgen kann, wird die Kralle insgesamt verbogen. Mit dem weiteren Eindringen des Endes der Kralle in den Mantel des Schlauchs wird die Kralle zwischen dem Ende der Befestigung an der Basis so umgebogen, daß sie letztendlich etwa die Form einer halben Heftklammer hat. Bei den meisten der üblichen Dicken der Schlauchmäntel tritt das Ende der Kralle noch nicht einmal auf der Innenseite des Mantels aus, weil es vorher weit genug in Umfangsrichtung verlagert worden ist.

Erfindungsgemäß ist das Ende an einem Endabschnitt angeordnet, der unmittelbar an den Abschnitt anschließt. Letztendlich ist die Kralle also im Prinzip aus zwei geradlinigen Abschnitten gebildet, nämlich dem Endabschnitt und dem an der Basis befestigten Abschnitt. Wenn die Kralle in den Mantel des Schlauchs eingedrückt worden ist, dann haben sich diese beiden Abschnitte so verformt, daß sie zusammen etwa einen Viertelkreis bilden. Selbstverständlich können sich an diesen Viertelkreis auch noch geradlinige Abschnitte anschließen. Vorzugsweise ist der Abschnitt rechtwinklig zur Basis gerichtet. Damit läßt sich die Kraft, die auf die Basis ausgeübt wird, am besten auf die Kralle übertragen. Der an der Basis befestigte Abschnitt behält jedenfalls im Bereich der Basis diese rechtwinklige Ausrichtung zur Basis bei. Nur weiter zum Ende hin wird die Kralle verformt. Der Begriff "rechtwinklig" ist hier nicht im mathematisch exakten Sinne zu verstehen. Der an der Basis befestigte Abschnitt sollte aber etwa parallel zur Eindrückrichtung liegen.

Vorzugsweise weist der Winkel eine Größe im Bereich von 110° bis 160° auf. Besonders bevorzugt sind Winkel im Bereich von 120° bis 150°. Besonders gut funktioniert das Eindrücken der Kralle in den Mantel eines Schlauchs, wenn der Winkel etwa 135° beträgt. In diesem Fall wird das Ende der Kralle mindestens so weit in Umfangsrichtung innerhalb des Mantels des Schlauchs verlagert, wie es in den Mantel eindringt.

Erfindungsgemäß gehen von der Basis zwei Krallen aus, deren Enden aufeinander zu gerichtet sind. Damit ergibt sich ein Kräftegleichgewicht in Umfangsrichtung, d.h. man muß die Basis nicht gegen ein seitliches Verrutschen in Umfangsrichtung sichern. Wenn die beiden Krallen endgültig umgebogen worden sind, ergibt sich im Querschnitt eine Form, die ähnlich einer ganzen Heftklammer ist.

Vorzugsweise sind die stumpfen Winkel beider Krallen betragsmäßig gleich groß. Je geringer der Unterschied zwischen den beiden Winkeln ist, desto besser ist das Gleichgewicht der Kräfte in Umfangsrichtung. Eine mathematisch exakte Gleichheit ist hier ebenfalls nicht erforderlich.

Vorzugsweise weist die Basis eine Außenseite auf, die glatt ist. Dies erleichtert zum einen das Ansetzen eines Werkzeugs. Zum anderen gibt es keine Elemente, die radial nach außen vorstehen und später einen Benutzer bei der Montage der Schlauchschelle stören könnten. Auch im montierten Zustand gibt es im Bereich des Positionierers keine störenden Elemente.

Vorzugsweise steht die Basis zumindest in einem Abschnitt axial über den Schellenmantel vor. Damit kann man die Krallen in den Schlauchmantel eindrücken außerhalb eines Bereichs, in dem die Spannkraft des Schellenmantels wirkt. Man verhindert dadurch, daß das Ende der Schelle durch diese Spannkraft doch vollständig durch den Mantel hindurchgedrückt wird.

Auch ist bevorzugt, daß die Basis zumindest in einem Abschnitt axial über die Krallen vorsteht. Dies erleichtert es, die Schlauchschelle so zu positionieren, daß die Kralle mit einem vorbestimmten Abstand zur Stirnseite des Schlauchs angeordnet ist. Man muß lediglich die Basis mit der Stirnseite des Schlauchs abschließen lassen.

Vorzugsweise ist der Positionierer an einer Federbrücke angeordnet, deren Enden mit dem Schellenmantel verbunden sind. Die Federbrücke hat den Vorteil, daß der Schellenmantel im Bereich des Positionierers durchaus einen gewissen Abstand zum Positionierer haben kann, wenn der Schellenmantel noch nicht gespannt ist. Beim Demontieren des Schlauchs, also beim Lösen der Schelle, hat die Federbrücke den Vorteil, daß sie den Schellenmantel spreizt, wenn die Spanneinrichtung entspannt wird.

Vorzugsweise ist die Federbrücke beweglich mit dem Schellenband verbunden. Dies gilt zumindest für ein Ende der Federbrücke. Die Federbrücke behindert also das Spannen des Schellenbandes nicht.

Hierbei ist bevorzugt, daß die Federbrücke im Bereich der Spanneinrichtung angeordnet ist. Die Federbrücke erfüllt einen weiteren Zweck. Sie verhindert nämlich, daß ein Ende des Schellenbandes und/oder die Spanneinrichtung über den Umfang des Schlauches reibt, wenn die Schlauchschelle gespannt wird. Die Bewegung, die beim Spannen der Schlauchschelle zwischen Teilen der Schlauchschelle erfolgt, läuft praktisch ausschließlich auf der Außenseite der Federbrücke ab.

Die Erfindung wird im folgenden anhand von bevorzugten Ausführungsbeispielen in Verbindung mit der Zeichnung beschrieben. Hierin zeigen:
- Fig. 1: eine perspektivische Darstellung einer Schlauchschelle mit zwei Positionierern,
- Fig. 2: eine perspektivische Darstellung eines Positionierers in einer abgewandelten Ausführungsform,
- Fig. 3: eine Ansicht des Positionierers vor dem Einsetzen in eine Schlauchwand und
- Fig. 4: der Positionierer nach dem Einsetzen in die Schlauchwand.

Eine Schlauchschelle 1 weist ein Schellenband 2 auf, das ringförmig gebogen ist, so daß ein äußeres Ende 3 über einem inneren Ende 4 zu liegen kommt. Eine Spanneinrichtung 5 verbindet die beiden Enden. Die Spanneinrichtung 5 weist eine Spannschraube 6 auf, die in eine Gewindeprägung 7 eingreift. Wenn die Spannschraube angezogen wird, dann werden die beiden Enden 3, 4 des Schlauchbandes 2 in Umfangsrichtung der Schlauchschelle 1 relativ zueinander bewegt, so daß sich der Innendurchmesser der Schlauchschelle 1 vermindert.

Eine derartige Schlauchschelle 1 dient dazu, einen nicht näher dargestellten Schlauch auf einem Stutzen festzuspannen. Hierzu wird die Schlauchschelle 1 auf den Schlauch aufgesetzt. Der Schlauch wird dann auf den Stutzen aufgeschoben, und die Schlauchschelle 1 wird gespannt. Hierzu ist es günstig, wenn sich die Spanneinrichtung 5 an einer definierten Position auf dem Schlauch befindet und dort auch festgehalten wird, so daß ein Monteur mit einem Werkzeug an der Spannschraube 6 angreifen kann.

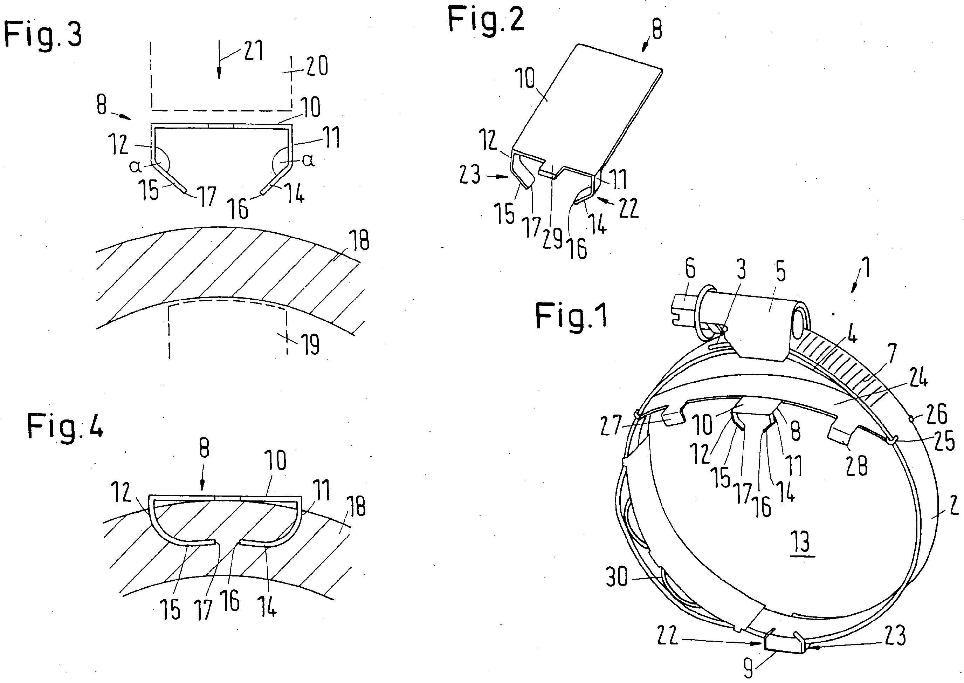

Um diese Positionierung sicherzustellen, weist die in Fig. 1 dargestellte Schlauchschelle 1 zwei Positionierer 8, 9 auf, die anhand der Fig. 2 bis 4 näher beschrieben werden.

Der Positionierer 8 (der Positionierer 9 ist prinzipiell gleich ausgebildet) weist eine Basis 10 auf, von der zwei Abschnitte 11, 12 etwa senkrecht abstehen. Die Abschnitte 11, 12 sind dabei in das Innere des vom Schellenband 2 umgebenen Raumes 13 gerichtet. An jedem Abschnitt 11, 12 schließt sich ein Endabschnitt 14, 15 an, wobei die Endabschnitte 14, 15 mit den Abschnitten 11, 12 jeweils einen Winkel α einschließen, der eine Größe von etwa 135° hat. Der Winkel α ist also ein stumpfer Winkel. Die beiden Endabschnitte 14, 15 weisen aufeinander zu. Die Endabschnitte 14, 15 enden jeweils in einem Ende 16, 17. Dieses Ende 16, 17 kann, falls erforderlich, angespitzt sein.

Wie aus Fig. 3 hervorgeht, wird zum Befestigen der Schlauchschelle 1 an einem Mantel 18 eines Schlauchs der Mantel 18 von innen mit einem Amboß 19 unterstützt, und zwar an der Stelle, wo der Positionierer 8 in den Mantel 18 eingesetzt werden soll. Der Positionierer 8 wird dann mit den Enden 16, 17 auf den Mantel 18 aufgesetzt und durch einen Stempel 20 in eine durch einen Pfeil 21 symbolisierte Eindrückrichtung in Richtung auf den Amboß 19 gedrückt. Die Enden 16, 17 dringen dabei in den Mantel 18 ein. Da die Endabschnitte 14, 15 zur Eindrückrichtung 21 abgewinkelt sind, bewirkt die Beaufschlagung des Positionierers 8 durch den Stempel 21, daß sich die Enden 16, 17 nicht nur parallel zur Eindrückrichtung 21 bewegen, sondern auch in Umfangsrichtung verdrängt werden, und zwar durch das Material des Mantels 18. Je weiter die Basis 10 auf den Umfang des Mantels 18 bewegt wird, desto stärker werden die Enden 16, 17 in Umfangsrichtung bewegt, so daß die "Beine" des Positionierers 8, die im Zustand vor dem Einsetzen nach Fig. 3 durch jeweils zwei geradlinige Abschnitte 11, 14 bzw. 12, 15 gebildet sind, nun einen bogenförmigen Verlauf haben. Der Positionierer 8 sitzt dann nach Art einer Heftklammer im Mantel 18 des Schlauches, ohne daß die Enden 16, 17 nach innen aus dem Schlauch herausragen.

Der Positionierer 9 ist unmittelbar am Schellenband 2 befestigt, beispielsweise durch Schweißen, Löten, Kleben oder durch eine Clinch- oder Prägeverbindung. Der Positionierer 9 ist so am Schellenband 2 befestigt, daß seine Krallen 22, 23, also die beiden winklig zueinanderstehenden Abschnitte 11, 14 bzw. 12, 15, einen axialen Abstand zum Schellenband 2 haben. Dadurch ist es möglich, den Stempel 20 axial außerhalb des Schellenbandes 2 auf die Basis 10 wirken zu lassen.

Der Positionierer 8 ist an einer Federbrücke 24 angeordnet, deren beide Enden beweglich am Schellenband 2 befestigt sind. Hierzu weist die Federbrücke an jedem Ende Klammern 25, 26 auf, die um das Schellenband 2 herumgebogen sind. Der Positionierer 8 kann auch einteilig mit der Federbrücke 24 ausgebildet sein.

In Umfangsrichtung beidseits des Positionierers 8 weist die Federbrücke 24 jeweils einen Anschlag 27, 28 auf, der bei vormontierter Schlauchschelle 1 an der Stirnseite des Mantels 18 anliegt.

Die Federbrücke 24 ist dort angeordnet, wo sich die beiden Enden 3, 4 des Schellenbandes überlappen, also dort, wo die Spanneinrichtung 5 angeordnet ist. Die Federbrücke 24 verhindert also, daß beim Spannen der Schlauchschelle 1 das innere Ende 4 bzw. die Spanneinrichtung 5 unmittelbar auf dem Umfang des Mantels 18 gleitet. Vielmehr erfolgt diese Bewegung auf der Außenseite der Federbrücke 24.

Der in Fig. 2 dargestellte Positionierer 8 ist gegenüber dem in Fig. 1 dargestellten Positionierer 8 etwas abgewandelt, weil er einen Vorsprung 29 aufweist, der axial über die Krallen 22, 23 vorsteht. Eine Schlauchschelle 1, die mit einem derartigen Positionierer 8 ausgerüstet ist, läßt sich in Axialrichtung einfach dadurch auf dem Mantel 18 positionieren, daß der Vorsprung 29 stirnseitig mit dem Mantel 18 abschließt.

Die beiden Positionierer 8, 9 sind im wesentlichen diametral gegenüberliegend angeordnet. Der Positionierer 9 ist dabei ortsfest am Schellenband 2 befestigt, während der Positionierer 8 sozusagen schwimmend am Schellenband 2 gelagert ist. Dadurch ist es möglich, die Positionierer 8, 9 fest mit dem Mantel 18 zu verbinden, ohne die Spannmöglichkeiten der Schlauchschelle 1 negativ zu beeinflussen.

Die Schlauchschelle 1 weist zusätzlich noch eine Federanordnung 30 auf ihrer Innenseite auf. Mit der Federanordnung 30 wird erreicht, daß die Spannung der Schlauchschelle 1 auch bei Durchmesseränderungen, die beispielsweise thermisch bedingt sein können, aufrechterhalten bleibt.

## Patentansprüche

1. Schlauchschelle (1) mit einem Schellenband (2), einer Spanneinrichtung (5) und einer Positionieranordnung, die mindestens einen Positionierer (8, 9) mit einer Basis (10) und zwei Krallen (22, 23), die in eine Schlauchwand (18) eindrückbar sind, aufweist, wobei die Krallen (22, 23) jeweils einen von der Basis (10) in eine Eindrückrichtung (21) nach innen vorstehenden Abschnitt (11, 12) und ein Ende (16, 17) aufweisen, das an einem Endabschnitt (14, 15) angeordnet ist, der unmittelbar an den Abschnitt (11, 12) anschließt und wobei der Endabschnitt (14, 15) mit dem Abschnitt (11, 12) einen stumpfen Winkel (α) einschließt, wobei die Enden (16, 17) der zwei von der Basis (10) ausgehenden Krallen (22, 23) aufeinander zu gerichtet sind.

2. Schlauchschelle (1) nach Anspruch 1, **dadurch gekennzeichnet, daß** der Abschnitt (11, 12) rechtwinklig zur Basis (10) gerichtet ist.

3. Schlauchschelle (1) nach einem der Ansprüche 1 bis 2, **dadurch gekennzeichnet, daß** der Winkel (α) eine Größe im Bereich von 110° bis 160° aufweist.

4. Schlauchschelle (1) nach Anspruch 1, **dadurch gekennzeichnet, daß** die stumpfen Winkel (α) beider Krallen (22, 23) betragsmäßig gleich groß sind.

5. Schlauchschelle (1) nach einem der Ansprüche 1 bis 4, **dadurch gekennzeichnet, daß** die Basis (10) eine Außenseite aufweist, die glatt ist.

6. Schlauchschelle (1) nach einem der Ansprüche 1 bis 5, **dadurch gekennzeichnet, daß** die Basis (10) zumindest in einem Abschnitt axial über den Schellenmantel (2) vorsteht.

7. Schlauchschelle (1) nach einem der Ansprüche 1 bis 6, **dadurch gekennzeichnet, daß** die Basis (10) zumindest in einem Abschnitt (29) axial über die Krallen (22, 23) vorsteht.

8. Schlauchschelle (1) nach einem der Ansprüche 1 bis 7, **dadurch gekennzeichnet, daß** der Positionierer (8) an einer Federbrücke (24) angeordnet ist, deren Enden mit dem Schellenmantel (2) verbunden sind.

9. Schlauchschelle (1) nach Anspruch 8, **dadurch gekennzeichnet, daß** die Federbrücke (24) beweglich mit dem Schellenband (2) verbunden ist.

10. Schlauchschelle (1) nach Anspruch 8 oder 9, **dadurch gekennzeichnet, daß** die Federbrücke (24) im Bereich der Spanneinrichtung (5) angeordnet ist.

## Claims

1. Hose clamp (1) with a clamping band (2), a clamping device (5) and a positioning arrangement, the positioning arrangement comprising at least one positioner (8, 9) having a base (10) and two claws (22, 23) which can be pressed into a hose wall (18), wherein the claws (22, 23) each have a section (11, 12) protruding inwardly from the base (10) in a pressing direction (21) and an end (16, 17) which is arranged at an end portion (14, 15) located immediately adjacent the section (11, 12), and wherein the end portion (14, 15) forms an obtuse angle (α) with the section (11, 12), wherein the ends (16, 17) of the two claws (22, 23) extending from the base (10) are directed towards each other.

2. Hose clamp (1) according to claim 1, **characterized in that** the section (11, 12) extends at a right angle relative to the base (10).

3. Hose clamp (1) according to any of claims 1 to 2, **characterized in that** the angle (α) has a magnitude ranging from 110° to 160°.

4. Hose clamp (1) according to claim 1, **characterized in that** the obtuse angles (α) of both claws (22, 23) have the same magnitude.

5. Hose clamp (1) according to any of claims 1 to 4, **characterized in that** the base (10) has an outer side which is smooth.

6. Hose clamp (1) according to any of claims 1 to 5, **characterized in that** the base (10) protrudes at least over a portion thereof axially beyond the clamping band (2).

7. Hose clamp (1) according to any of claims 1 to 6, **characterized in that** the base (10) protrudes at least over a portion (29) thereof axially beyond the claws (22, 23).

8. Hose clamp (1) according to any of claims 1 to 7, **characterized in that** the positioner (8) is arranged on a spring bridge (24) whose ends are connected to the clamping band (2).

9. Hose clamp (1) according to claim 8, **characterized in that** the spring bridge (24) is movably connected to the clamping band (2).

10. Hose clamp (1) according to claim 8 or 9, **characterized in that** the spring bridge (24) is arranged in the area of the clamping device (5).

## Revendications

1. Collier de serrage (1) avec une bride (2), un dispositif de serrage (5) et un dispositif de positionnement, qui comporte au moins un positionneur (8, 9) avec une base (10) et deux griffes (22, 23) qui peuvent être enfoncées dans une paroi de tuyau (18), les griffes (22, 23) comportant chacune un tronçon (11, 12) dépassant de la base (10) vers l'intérieur dans une direction d'enfoncement (21) et une extrémité (16, 17) qui est agencée sur un tronçon d'extrémité (14, 15) qui fait directement suite au tronçon (11, 12) et le tronçon d'extrémité (14, 15) formant avec le tronçon (11, 12) un angle (α) obtus, les extrémités (16, 17) des deux griffes (22, 23) partant de la base (10) étant dirigées l'une vers l'autre.

2. Collier de serrage (1) selon la revendication 1, **caractérisé en ce que** le tronçon (11, 12) est dirigé perpendiculairement à la base (10).

3. Collier de serrage (1) selon l'une des revendications 1 à 2, **caractérisé en ce que** l'angle (α) est compris entre 110° et 160°.

4. Collier de serrage (1) selon la revendication 1, **caractérisé en ce que** les angles obtus (α) des deux griffes (22, 23) sont de dimension égale en valeur absolue.

5. Collier de serrage (1) selon l'une des revendications 1 à 4, **caractérisé en ce que** la base (10) comporte un côté extérieur qui est lisse.

6. Collier de serrage (1) selon l'une des revendications 1 à 5, **caractérisé en ce que** la base (10) dépasse au moins dans un tronçon axialement au-delà de l'enveloppe de bride (2).

7. Collier de serrage (1) selon l'une des revendications 1 à 6, **caractérisé en ce que** la base (10) dépasse au moins dans un tronçon (29) axialement au-delà des griffes (22,23).

8. Collier de serrage (1) selon l'une des revendications 1 à 7, **caractérisé en ce que** le positionneur (8) est agencé sur un pont faisant ressort (24) dont les extrémités sont assemblées à l'enveloppe de bride (2).

9. Collier de serrage (1) selon la revendication 8, **caractérisé en ce que** le pont faisant ressort (24) est assemblé, mobile, avec la bride (2).

10. Collier de serrage (1) selon la revendication 8 ou 9, **caractérisé en ce que** le pont faisant ressort (24) est agencé dans la zone du dispositif de serrage (5).
